# FASCICULE DE BREVET EUROPEEN

(11) **EP 3 580 466 B1**
(45) Date de publication et mention de la délivrance du brevet: **09.12.2020**
(21) Numéro de dépôt: 18706796.2
(22) Date de dépôt: 06.02.2018
(51) Int. Cl.: F16C 33/66, F16C 19/38, F16C 33/36, F16C 33/46, F16C 33/48, F16C 23/08

(54) **ROULEMENT A ROTULE SUR ROULEAUX PRÉSENTANT UNE ÉVACUATION DE LUBRIFIANT AMÉLIORÉE, DE PRÉFÉRENCE POUR RÉDUCTEUR DE VITESSE DE TURBOPROPULSEUR D'AÉRONEF**
SELBSTAUSRICHTENDES ROLLENLAGER MIT VERBESSERTER SCHMIERMITTELENTLADUNG, VORZUGSWEISE FÜR EINEN DREHZAHLUNTERSETZER EINES FLUGZEUG-TURBOSTRAHLMOTORS
SELF-ALIGNING ROLLER BEARING HAVING IMPROVED LUBRICANT DISCHARGE, PREFERABLY FOR AN AIRCRAFT TURBOJET ENGINE SPEED REDUCER

(30) Priorité: 09.02.2017 FR 1751081
(43) Date de publication de la demande: 18.12.2019
(73) Titulaire: Safran Transmission Systems, 92700 Colombes (FR)
(72) Inventeur: HERT, Xavier Paul Lucien, 77550 Moissy-Cramayel (FR); MOREAU DE LIZOREUX, Aldric Renaud Gabriel Marie, 77550 Moissy-Cramayel (FR); MORELLI, Boris Pierre Marcel, 77550 Moissy-Cramayel (FR)
(74) Mandataire: Brevalex
(86) Numéro de dépôt international: PCT/FR2018/050286
(87) Numéro de publication internationale: WO 2018/146410

(56) Documents cités:
- FR-A1- 3 029 246
- JP-A- 8 177 869
- JP-A- 2001 208 075
- JP-A- 2005 321 047

## Description

### DOMAINE TECHNIQUE

La présente invention se rapporte au domaine des roulements à rotule sur rouleaux. Ce type de roulement comprend généralement deux rangées de rouleaux, dits rouleaux sphériques, ainsi qu'un chemin de roulement sphérique prévu sur une bague extérieure du roulement.

L'invention se rapporte plus particulièrement à l'évacuation de lubrifiant en dehors de ce type de roulement, dont la forme concave du chemin de roulement extérieur sphérique favorise la rétention du lubrifiant.

L'invention s'applique préférentiellement à un réducteur de vitesse pour turbopropulseur d'aéronef.

### ETAT DE LA TECHNIQUE ANTERIEURE

En plus des éléments cités ci-dessus, un roulement à rotule sur rouleaux comporte deux chemins de roulement inclinés par rapport à l'axe du roulement, ces deux chemins sphériques étant pratiqués sur une bague intérieure du roulement. Le centre de la sphère du chemin de roulement extérieur se trouve au niveau de l'axe du roulement. Le roulement présente ainsi une capacité d'auto-alignement et reste tolérant aux défauts d'alignement de l'arbre par rapport au palier, causés, par exemple, par la flexion de l'arbre. Ce type de roulement est notamment employé pour supporter de lourdes charges radiales ainsi que de lourdes charges axiales, dans les deux sens. Il se révèle ainsi parfaitement adapté à une implantation dans un réducteur de vitesse de turbomachine d'aéronef, mais s'avère plus généralement adapté à tout type d'ensemble mécanique dans lequel la bague extérieure de roulement est en rotation.

L'une des difficultés associées à ce type de roulement réside dans l'évacuation du lubrifiant, qui est généralement introduit depuis l'intérieur par des orifices traversant la bague intérieure. En effet, après avoir lubrifié les rouleaux, le lubrifiant se retrouve piégé du fait de la force centrifuge dans le creux du chemin de roulement sphérique. Ainsi, pour permettre l'évacuation du lubrifiant piégé, il est habituellement réalisé des trous à travers la bague extérieure qui forme ce chemin de roulement.

Cependant, ces trous d'évacuation de lubrifiant à travers la bague extérieure fragilisent considérablement cette bague, qui est soumise à de nombreuses contraintes diverses et répétées comme le passage des rouleaux, ou encore l'effet centrifuge de fait de sa rotation. De plus, lorsque la bague extérieure est intégrée à une roue dentée comme un satellite d'un train épicycloïdal, l'engrènement de ce satellite avec d'autres éléments dentés accroit encore davantage les sollicitations subies par la bague extérieure de roulement. Celle-ci s'avère par conséquent fragile en fatigue, et nécessite d'être surdimensionnée, au détriment de sa masse.

Le document JP2001208075A montre un roulement rotulant muni d'une cage comme décrite dans le préambule de la revendication 1 annexée.

### EXPOSÉ DE L'INVENTION

Pour répondre au moins partiellement aux inconvénients relatifs aux réalisations de l'art antérieur, l'invention a tout d'abord pour objet un roulement à rotule sur rouleaux selon les caractéristiques de la revendication 1.

En fonctionnement, l'invention prévoit astucieusement de mettre à profit le différentiel de vitesses de rotation entre la bague extérieure tournante, et la première cage tournante. En effet, ce différentiel de vitesse permet la mise en mouvement du lubrifiant autour de l'axe du roulement, dans l'espace défini entre la bague extérieure et la première cage. Lorsqu'il se produit, ce flux de lubrifiant rencontre alors le/les déflecteurs qui assurent l'évacuation d'au moins une partie de ce flux en dehors du roulement, vers un côté de celui-ci.

Cette manière d'effectuer l'évacuation du lubrifiant permet de s'affranchir de la présence de trous d'évacuation à travers la bague extérieure du roulement. La fabrication de celle-ci s'en trouve facilitée, et la tenue en fatigue améliorée. En outre, la bague extérieure ne nécessite plus d'être surdimensionnée, ce qui génère avantageusement un gain de masse non négligeable.

De plus, le déflecteur s'étend dans le second sens axial au-delà de la première cage, de façon à recouvrir une partie de la seconde cage. Cette disposition permet de collecter encore davantage de lubrifiant. En outre, la hauteur de lubrifiant piégée dans la piste extérieure est plus basse en s'éloignant du centre de cette piste, ce qui est plus intéressant pour les roulements présentant un désalignement important.

L'invention prévoit de préférence au moins l'une des caractéristiques optionnelles suivantes, prises isolément ou en combinaison.

Ledit déflecteur s'étend également entre deux rouleaux directement consécutifs dans une direction circonférentielle de la première cage, afin de canaliser encore mieux le lubrifiant vers le côté du roulement, pour son extraction.

Dans le même but, ledit déflecteur s'étend dans le premier sens axial jusqu'à l'extrémité de la première cage située au niveau du premier côté du roulement. Cela permet de canaliser encore mieux le lubrifiant, jusqu'à son extraction vers le côté du roulement.

Chaque déflecteur présente de préférence une surface de déflection de lubrifiant parallèle à un axe du roulement, ou inclinée selon une direction circonférentielle de sorte que ses deux extrémités axiales opposées soient décalées l'une de l'autre selon la direction circonférentielle. Dans ce dernier cas, une forme de rampe est également envisageable pour la surface de déflection, sans sortir du cadre de l'invention. Ainsi, cette surface de déflection n'est pas nécessairement plane.

L'invention a également pour objet un réducteur de vitesse pour l'entraînement d'une hélice d'un turbopropulseur d'aéronef, ce réducteur comprenant un train épicycloïdal comportant au moins un roulement à rotule tel que décrit ci-dessus, associé à l'un des satellites du train épicycloïdal.

Plus préférentiellement, le train épicycloïdal comporte :
- une couronne fixe ;
- des satellites ;
- un porte-satellites ;
- un planétaire ; et
- ledit moins un roulement à rotule associé à l'un des satellites de sorte qu'un moyeu du satellite constitue ladite bague extérieure tournante du roulement.

Enfin, l'invention a pour objet un turbopropulseur d'aéronef comprenant un tel réducteur de vitesse, avec ledit porte-satellites ou ledit planétaire entraînant l'hélice du turbopropulseur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un turbopropulseur d'aéronef selon l'invention ;
- la figure 2 représente une vue agrandie en demi-coupe axiale du train épicycloïdal montré sur la figure précédente ;
- la figure 3 représente une vue en partielle en perspective d'un satellite du train épicycloïdal montré sur la figure précédente, le satellite étant associé à un roulement propre à l'invention ;
- la figure 4 est une vue en perspective de la partie intérieure du roulement montré sur la figure précédente ;
- la figure 5 est une vue de face de la partie de roulement montrée sur la figure précédente ; et
- la figure 6 est une vue analogue à celle de la figure précédente, selon une alternative de réalisation.

### EXPOSÉ DÉTAILLÉ DE MODES DE RÉALISATION PRÉFÉRÉS

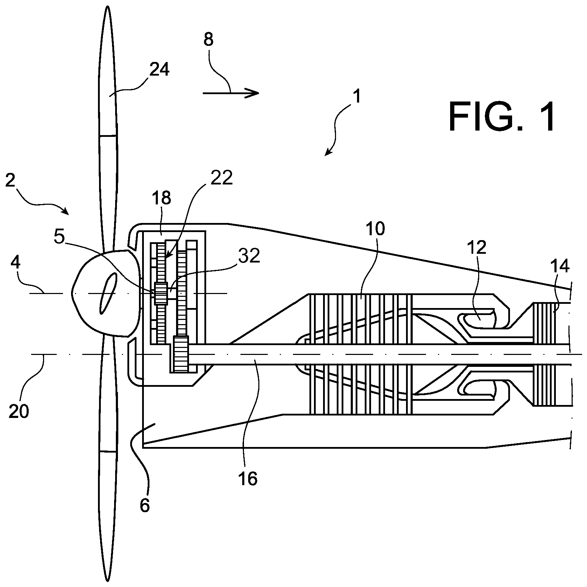

En référence tout d'abord à la figure 1, il est représenté un turbopropulseur 1 pour aéronef, selon la présente invention. Le turbopropulseur comporte de manière classique une hélice 2 mobile à rotation selon un axe de rotation 4, sur lequel est centré un arbre d'hélice 5. La vitesse de l'hélice 2 est préférentiellement de l'ordre de 1000 à 1500 trs/min, et son couple de sortie de l'ordre de 30 kN.m.

A l'aval de l'hélice 2, le turbopropulseur 1 comporte une entrée d'air 6, située par exemple verticalement sous l'axe de rotation 4 de l'hélice. A cet égard, il est noté que dans l'ensemble de la description, les termes « amont » et « aval » sont employés en référence à une direction principale de circulation d'air à travers l'hélice 2, cette direction étant parallèle à l'axe 4 et schématisé par la flèche 8 sur la figure 1.

L'entrée d'air 6 alimente en air un compresseur ou un groupe de compresseurs 10, à l'aval duquel se trouve une chambre de combustion 12. Les gaz issus de la combustion se détendent dans une turbine ou un groupe de turbines 14, qui entraîne un arbre moteur ou un groupe d'arbres 16. Cet arbre 16 est à distance et parallèle à l'arbre d'hélice 5. Il entraîne un réducteur de vitesse 18 qui entraîne lui-même l'arbre d'hélice 5. L'arbre moteur 16, le groupe de compresseurs 10, la chambre de combustion 12 et le groupe de turbines 14 sont centrés sur un axe 20 parallèle à l'axe de rotation 4 de l'hélice 2, l'entrée d'air 6 se trouvant verticalement sous cet axe 20.

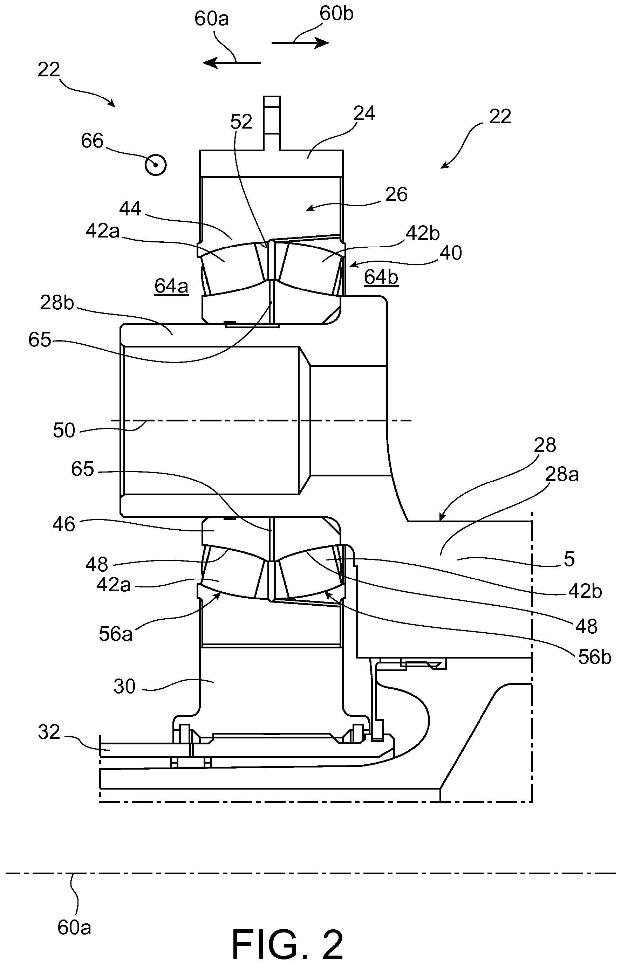

Le réducteur de vitesse 18, également dénommé boîte de transmission, correspond à un boîtier d'engrenages comprenant en particulier un train épicycloïdal 22, qui va être détaillé en référence à la figure 2.

Le train épicycloïdal 22 comporte tout d'abord une couronne fixe 24, dentée intérieurement et centrée sur l'axe 4. Cette couronne fixe 24 engrène avec des satellites 26 prévus par exemple dans un nombre compris entre 3 et 6. Les satellites 26 sont supportés par un porte-satellites 28 centré sur l'axe 4. En outre, le train 22 comprend un planétaire 30 également centré sur l'axe 4 et engrenant avec les satellites 26. Dans cette configuration, un arbre planétaire 32 centré sur l'axe 4 est lui-même entraîné en rotation par d'autres éléments du réducteur. La couronne 24 fait partie du d'un stator du turbopropulseur, et forme de préférence le carter du réducteur de vitesse. Le moyeu 28a du porte-satellites est relié et solidaire en rotation de l'arbre d'hélice 5, de manière à entraîner l'hélice en rotation. Néanmoins, d'autres agencements sont possibles, par exemple en faisant en sorte que l'hélice soit entraînée non pas par le porte-satellites 28, mais par l'arbre planétaire 32.

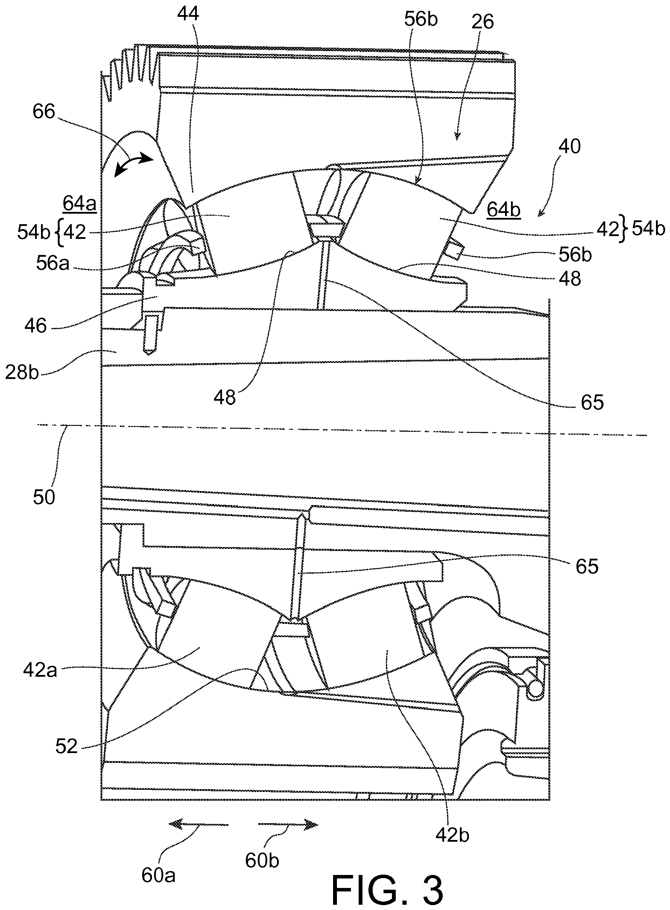

Pour assurer la rotation des satellites sur les doigts 28b du porte-satellites, il est prévu des roulements 40 spécifiques à l'invention. Il s'agit de roulements à rotule, également dites roulements rotulés. L'un de ces roulements va à présent être décrit en référence conjointement aux figures 2 à 5.

Le roulement 40 est un roulement à rotule sur rouleaux 42. Ces rouleaux sont dénommés rouleaux sphériques. Les rouleaux 42 sont enserrés entre une bague extérieure tournante 44, et une bague intérieure 46 solidaire en rotation du doigt 28b du porte-satellites. La bague intérieure 46 définit extérieurement deux chemins de roulement 48, inclinés par rapport à l'axe du roulement 50. D'autre part, un chemin de roulement sphérique 52 est prévu intérieurement sur la bague extérieure 44 du roulement. Le centre de la sphère du chemin de roulement extérieur se trouve au niveau de l'axe du roulement. Ici, cette bague extérieure 44 présente la particularité de faire partie intégrante du satellite 26, en formant le moyeu de ce dernier. En d'autres termes, le moyeu/la jante du satellite est réalisé d'un seul tenant avec le reste du satellite concerné.

Le roulement 40 présente une première rangée annulaire 54a de rouleaux 42 maintenus les uns par rapport aux autres par une première cage tournante 56a. La cage 56a est centrée sur l'axe de roulement 50, et présente des orifices traversants dans lesquels sont logés les rouleaux. De manière analogue, le roulement 40 présente une seconde rangée annulaire 54b de rouleaux 42 maintenus les uns par rapport aux autres par une seconde cage tournante 56b.

Pour la suite de la description, il est défini deux sens axiaux opposés, tous deux parallèles à l'axe de roulement 50. Il s'agit d'abord d'un premier sens axial 60a allant de la seconde cage 56b vers la première cage 56a, et d'un second sens axial opposé 60b, allant de la première cage 56a vers la seconde cage 56b.

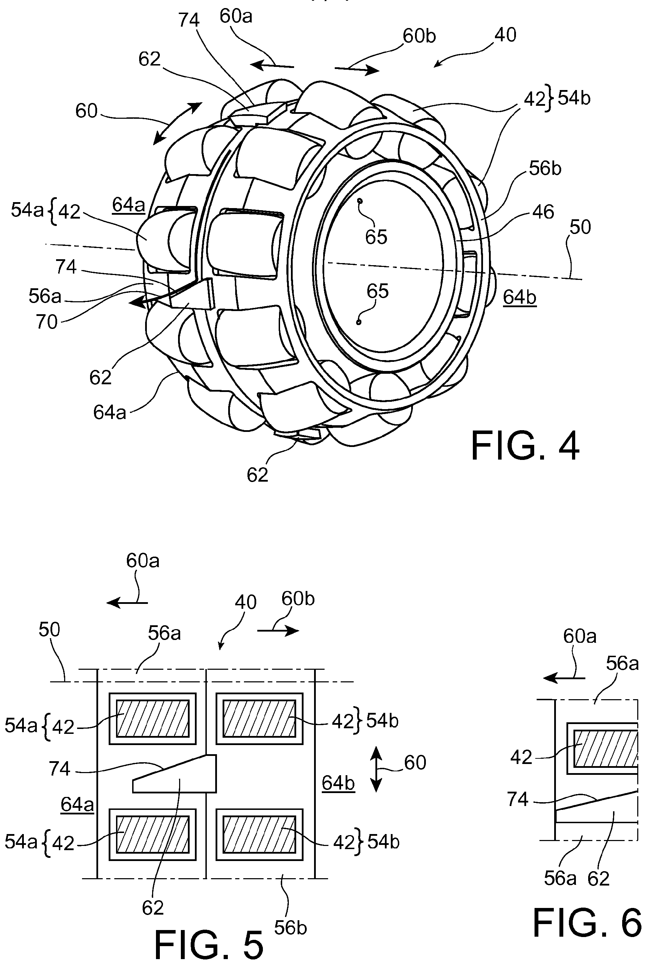

L'une des particularités de l'invention réside dans la présence, sur la surface extérieure de la première cage 56a, d'un ou plusieurs déflecteurs 62 conçus pour permettre l'évacuation de lubrifiant dans le premier sens axial 60a, en direction d'un premier côté 64a du roulement. Le nombre de déflecteurs 62, visibles sur les figures 4 et 5, peut varier en fonction des besoins. Il peut être agencé un déflecteur 62 entre chaque paire de deux rouleaux 42 directement consécutifs dans la direction circonférentielle 66 du roulement, ou bien seulement entre certaines de ces paires. Dans le mode de réalisation représenté, il est prévu entre 4 et 6 déflecteurs, répartis régulièrement tout autour de la cage.

Chaque déflecteur 62 s'étend donc préférentiellement entre deux rouleaux 42 directement consécutifs, mais s'étend également dans le second sens axial 60b au-delà de ces deux rouleaux. En fonctionnement, le lubrifiant est introduit radialement par des orifices 65 traversant la bague intérieure 46. Ensuite, après avoir lubrifié les rouleaux 42, le lubrifiant se dirige par centrifugation dans le creux du chemin de roulement sphérique 52. Cependant, la bague extérieure 44 tourne à une vitesse qui est celle de son satellite associé, et qui supérieure à celle de la cage. A titre indicatif, la première cage 56a tourne 1,5 à 2 fois moins vite que le satellite 26. L'invention met ainsi judicieusement à profit le différentiel de vitesses de rotation entre la bague extérieure tournante 44 et la première cage tournante 56a, pour créer un mouvement de lubrifiant autour de l'axe du roulement 50, dans l'espace défini entre la bague extérieure 44 et la première cage 56a. Lorsque ce flux de lubrifiant 70, schématisé sur la figure 4, se produit, il rencontre alors le/les déflecteurs 62 qui dévient ce flux dans le premier sens axial 60a, permettant ainsi l'évacuation d'au moins une partie de ce flux 70 en dehors du roulement 22, par son premier côté 64a.

Sur la figure 5, il est montré que le déflecteur 62 peut s'étendre axialement, selon le premier sens 60a, de sorte que son extrémité se situe à distance de l'extrémité de la cage dans ce même premier sens axial 60. Selon une alternative de réalisation montrée sur la figure 6, le déflecteur 62 s'étend davantage dans le premier sens axial 60a de manière à ce que son extrémité axiale se situe au niveau de l'extrémité de la cage, dans ce même premier sens axial 60a. Cela permet une meilleure déviation et canalisation du flux de lubrifiant 70, jusqu'au premier côté 64a du roulement.

Dans le second sens axial 60b, le déflecteur 62 s'étend au-delà des deux rouleaux 42, de manière à capter au mieux le lubrifiant en rotation. D'ailleurs, pour accroître encore davantage cette captation de lubrifiant, il est prévu que le déflecteur 62 s'étende également au-delà de la première cage 56a, jusqu'à recouvrir une partie de la seconde cage 56b. Néanmoins, pour que cette particularité de l'invention n'entrave pas la rotation de la seconde cage 56b, le déflecteur 62 ne s'étend pas jusqu'aux rouleaux de la seconde rangée annulaire 54b. Toujours dans le but de capter une grande partie du flux 70, le déflecteur 62 s'étend radialement pour s'approcher au plus près du chemin de roulement sphérique 52, sans pour autant le contacter afin d'éviter d'entraver la cinématique du roulement.

Comme cela est le mieux visible sur la figure 5, le déflecteur 62 présente une surface de déflection de lubrifiant 74 inclinée selon la direction circonférentielle 66, de sorte que ses deux extrémités axiales opposées soient décalées l'une de l'autre selon cette même direction 66. La surface de déflection 74 est celle qui est impactée par le flux de lubrifiant 70, lorsque ce dernier est mis en mouvement entre la bague extérieure 44 et les deux cages 56a, 56b. Elle est plane comme montrée sur la figure 5, ou bien en forme de rampe. Alternativement, cette surface de déflection 74 pourrait être parallèle à l'axe de roulement 50 ou seulement faiblement inclinée par rapport à ce dernier, sans sortir du cadre de l'invention.

La première cage de roulement 56a est préférentiellement réalisée par fabrication additive, ou par injection polymère Peek. Ces deux techniques se révèlent en effet parfaitement adaptées à l'obtention d'une cage annulaire comportant des excroissances radiales depuis la surface extérieure de celle-ci, afin de former les déflecteurs 62.

Bien entendu, diverses modifications peuvent être apportées par l'homme du métier à l'invention qui vient d'être décrite, uniquement à titre d'exemples non limitatifs.

## Revendications

1. Roulement à rotule (40) sur rouleaux (42) comportant une bague extérieure tournante (44) présentant un chemin de roulement sphérique (52), le roulement comprenant des première et seconde rangées annulaires de rouleaux (54a, 54b), respectivement associées à des première et seconde cages tournantes (56a, 56b) de maintien desdits rouleaux,
la première cage (56a) présente une surface extérieure équipée d'au moins un déflecteur (62) pour l'évacuation de lubrifiant vers un premier côté (64a) du roulement, dans un premier sens axial (60a) allant de la seconde cage (56b) vers la première cage (56a), ledit déflecteur (62) s'étendant au-delà des rouleaux (42) associés à la première cage (56a), dans un second sens axial (60b) opposé au premier, **caractérisé en ce que** ledit déflecteur (62) s'étend dans le second sens axial (60b) également au-delà de la première cage (56a), de façon à recouvrir une partie de la seconde cage (56b).

2. Roulement à rotule selon la revendication 1, **caractérisé en ce que** ledit déflecteur (62) s'étend également entre deux rouleaux (42) directement consécutifs dans une direction circonférentielle (66) de la première cage (56a).

3. Roulement à rotule selon la revendication 2, **caractérisé en ce que** ledit déflecteur (62) s'étend dans le premier sens axial (60a) jusqu'à l'extrémité de la première cage (56a) située au niveau du premier côté (64a) du roulement.

4. Roulement à rotule selon l'une quelconque des revendications précédentes, **caractérisé en ce que** chaque déflecteur (62) présente une surface de déflection de lubrifiant (74) parallèle à un axe du roulement (50), ou inclinée selon une direction circonférentielle (66) de sorte que ses deux extrémités axiales opposées soient décalées l'une de l'autre selon la direction circonférentielle (66).

5. Réducteur de vitesse (18) pour l'entraînement d'une hélice (2) d'un turbopropulseur (1) d'aéronef, **caractérisé en ce qu'**il comprend un train épicycloïdal (22) comportant au moins un roulement à rotule (40) selon l'une quelconque des revendications précédentes, associé à l'un des satellites (26) du train épicycloïdal (22).

6. Réducteur selon la revendication 5, **caractérisé en ce que** le train épicycloïdal (22) comporte :
- une couronne fixe (24) ;
- des satellites (26) ;
- un porte-satellites (28) ;
- un planétaire (30) ; et
- ledit moins un roulement à rotule (40) selon l'une quelconque des revendications 1 à 4, le roulement (40) étant associé à l'un des satellites (26) de sorte qu'un moyeu du satellite constitue ladite bague extérieure tournante (44) du roulement.

7. Turbopropulseur d'aéronef (1) comprenant un réducteur de vitesse (18) selon la revendication 5 ou la revendication 6, **caractérisé en ce que** ledit porte-satellites (28) ou ledit planétaire (30) entraîne l'hélice (2) du turbopropulseur.

## Patentansprüche

1. Selbstausrichtendes (40) Rollenlager (42) mit einem sich drehenden Außenring (44), welcher einen runden Laufring (52) aufweist, wobei das Lager erste und zweite ringförmige Rollenanordnungen (54a, 54b) umfasst, welche jeweils ersten und zweiten sich drehenden Käfigen (56a, 56b) zum Halten der Rollen zugeordnet sind,
wobei der erste Käfig (56a) eine Außenfläche aufweist, die mit mindestens einem Abweiser (62) zur Schmiermittelabführung zu einer ersten Seite (64a) des Lagers in einer ersten axialen Richtung (60a) von dem zweiten Käfig (56b) zu dem ersten Käfig (56a) ausgerüstet ist, wobei sich der Abweiser (62) oberhalb der dem ersten Käfig (56a) zugeordneten Rollen (42) in einer zweiten axialen Richtung (60b) erstreckt, die zu der ersten Richtung entgegengesetzt ist,
**dadurch gekennzeichnet, dass**
sich der Abweiser (62) in der zweiten axialen Richtung (60b) außerdem oberhalb des ersten Käfigs (56a) derart erstreckt, dass er einen Teil des zweiten Käfigs (56b) abdeckt.

2. Selbstausrichtendes Lager nach Anspruch 1, **dadurch gekennzeichnet, dass** sich der Abweiser (62) weiterhin zwischen zwei unmittelbar aufeinanderfolgenden Rollen (42) in einer Umfangsrichtung (66) des ersten Käfigs (56a) erstreckt.

3. Selbstausrichtendes Lager nach Anspruch 2, **dadurch gekennzeichnet, dass** sich der Abweiser (62) in der ersten axialen Richtung (60a) bis zu dem Ende des ersten Käfigs (56a) erstreckt, das sich auf gleicher Höhe mit der ersten Seite (64a) des Lagers befindet.

4. Selbstausrichtendes Lager nach einem der vorhergehenden Ansprüche, **dadurch gekennzeichnet, dass** jeder Abweiser (62) eine Fläche zum Abweisen von Schmiermittel (74) aufweist, die parallel zu einer Achse des Lagers (50) verläuft oder in einer Umfangsrichtung (66) derart geneigt ist, dass ihre beiden entgegengesetzten axialen Enden in der Umfangsrichtung (66) zueinander versetzt sind.

5. Drehzahlminderer (18) zum Antrieb eines Propellers (2) eines Flugzeug-Turbostrahlmotors (1), **dadurch gekennzeichnet, dass** dieser ein Planetengetriebe (22) mit mindestens einem selbstausrichtenden Lager (40) nach einem der vorhergehenden Ansprüche aufweist, welches einem der Planetenräder (26) des Planetengetriebes (22) zugeordnet ist.

6. Minderer nach Anspruch 5, **dadurch gekennzeichnet, dass** das Planetengetriebe (22) Folgendes umfasst:
- einen feststehenden Kranz (24);
- Planetenräder (26);
- einen Planetenradträger (28);
- ein Zentralrad (30); sowie
- das mindestens eine selbstausrichtende Lager (40) nach einem der Ansprüche 1 bis 4, wobei das Lager (40) einem der Planetenräder (26) derart zugeordnet ist, dass eine Nabe des Planetenrades den sich drehenden Außenring (44) des Lagers bildet.

7. Flugzeug-Turbostrahlmotor (1) mit einem Drehzahlminderer (18) nach Anspruch 5 oder Anspruch 6, **dadurch gekennzeichnet, dass** der Planetenradträger (28) oder das Zentralrad (30) den Propeller (2) des Turbostrahlmotors antreibt.

## Claims

1. A ball bearing (40) on rollers (42) comprising a rotating outer ring (44) having a spherical rolling track (52), the bearing comprising first and second annular rows of rollers (54a, 54b), respectively associated with first and second rotary cages (56a, 56b) for holding said rollers,
the first cage (56a) has an outer surface provided with at least one baffle (62) for discharging lubricant to a first side (64a) of the bearing in a first axial direction (60a) from the second cage (56b) to the first cage (56a), said baffle (62) extending beyond the rollers (42) associated with the first cage (56a), in a second axial direction (60b) opposite the first,
**characterized in that** said baffle (62) extends in the second axial direction (60b) also beyond the first cage (56a), so as to cover a portion of the second cage (56b).

2. A ball bearing according to claim 1, **characterised in that** said baffle (62) also extends between two directly consecutive rollers (42) in a circumferential direction (66) of the first cage (56a).

3. A ball bearing according to claim 2, **characterized in that** said baffle (62) extends in the first axial direction (60a) to the end of the first cage (56a) located at the first side (64a) of the bearing.

4. A ball bearing according to any one of the preceding claims, **characterised in that** each baffle (62) has a lubricant deflection surface (74) parallel to an axis of the bearing (50), or inclined in a circumferential direction (66) so that its two opposite axial ends are offset from each other in the circumferential direction (66).

5. A speed reducer (18) for driving a propeller (2) of a turboprop engine (1), **characterised in that** it comprises an epicyclic gear train (22) comprising at least one ball bearing (40) according to any one of the preceding claims, associated with one of the planet gears (26) of the epicyclic gear train (22).

6. The reducer according to claim 5, **characterised in that** the epicyclic gear train (22) comprises:
- a fixed ring (24);
- planet gears (26);
- a planet gear carrier (28);
- a sun gear (30); and
- at least one ball bearing (40) according to any one of claims 1 to 4, the bearing (40) being associated with one of the planet gears (26) such that a hub of the planet gear constitutes said rotating outer ring (44) of the bearing.

7. An aircraft turboprop engine (1) comprising a speed reducer (18) according to claim 5 or claim 6, **characterised in that** said planet carrier (28) or said sun gear (30) drives the propeller (2) of the turboprop engine.
